# EUROPÄISCHE PATENTSCHRIFT

(11) **EP 3 835 254 B1**
(45) Veröffentlichungstag und Bekanntmachung des Hinweises auf die Patenterteilung: **31.12.2025**
(21) Anmeldenummer: 20212823.7
(22) Anmeldetag: 09.12.2020
(51) Int. Cl.: B66F 11/04, B66F 17/00

(54) **ABSTANDSMESSSYSTEM FÜR EIN FAHRZEUG**
DISTANCE MEASUREMENT SYSTEM FOR A VEHICLE
SYSTÈME DE MESURE DE DISTANCE POUR UN VÉHICULE

(30) Priorität: 13.12.2019 DE 102019219619
(43) Veröffentlichungstag der Anmeldung: 16.06.2021
(73) Patentinhaber: MOBA Mobile Automation AG, 65555 Limburg (DE)
(72) Erfinder: Schmidt, Thomas, 65555 Limburg (DE); Gemmer, Martin Jan, 65555 Limburg (DE); Horn, Alfons, 65555 Limburg (DE)
(74) Vertreter: Pfitzner, Hannes

(56) Entgegenhaltungen:
- EP-A1- 1 452 479
- EP-A1- 3 173 369
- DE-B3- 102008 064 896
- JP-A- 2013 010 589
- KR-A- 20190 136 145

## Beschreibung

Ausführungsbeispiele der vorliegenden Erfindung beziehen sich auf ein Abstandsmesssystem sowie ein Fahrzeug mit einem Abstandsmesssystem. Im Allgemeinen liegt die Erfindung auf dem Gebiet von Fahrzeugen, wie beispielsweise mobilen Bau- oder Arbeitsmaschinen, Hubarbeitsbühnen, Feuerwehrdrehleitern oder dergleichen.

Aus der WO 2017/178737 A1 ist ein Steuerpult für eine Hubarbeitsbühne mit Schutz gegen Quetschen des Bedieners bekannt. Die Hubarbeitsbühne umfasst einen Arbeitskorb mit einem daran versehenen Geländer, wobei an dem Geländer ein Steuerpult zum Steuern von Bewegungen der Hubarbeitsbühne angeordnet ist. An dem Steuerpult ist ein System angeordnet, mit welchem bestimmt werden kann, ob das Steuerpult am Geländer befestigt ist, ob sich eine Person in dem Arbeitskorb neben dem Steuerpult befindet oder sich in Richtung des Steuerpultes neigt, oder ob ein Hindernis vorhanden ist. Das System umfasst dazu mindestens einen Sender und einen Empfänger von Wellen, wobei das System eine Störung eines externen Objekts dadurch erfasst, dass der Empfänger die vom Sender ausgesendeten Wellen durch Reflexion von dem störenden Objekt empfängt.

Die EP 3173369 A1 zeigt eine Arbeitsplattform mit Schutzvorrichtung. Des Weiteren offenbart das Dokument JP2013010589A ein Abstandsmesssystem gemäß dem Oberbegriff des Anspruchs 1.

Nachteilig an dem bekannten System ist, dass je nach Anordnung des Steuerpultes im Arbeitskorb nicht alle Hindernisse im Umfeld des Arbeitskorbs erfasst werden, und es somit bei Bewegungen des Arbeitskorbs zu Kollisionen mit nicht erfassten Hindernissen kommen kann. Ferner kann es zu Fehlmessungen kommen, und zwar gerade bei nach oben gerichteten Sendern und Empfängern, da hierbei beispielsweise Regenwasser nicht ablaufen kann, sondern auf den Sensorköpfen stehen bleibt. Dies kann zur Folge haben, dass eine sich in Richtung des Steuerpultes neigende Person nicht bzw. nicht richtig erkannt wird und gegebenenfalls eingeklemmt wird.

Aufgabe der vorliegenden Erfindung ist es daher, ein verbessertes Konzept für eine Hinderniserkennung, beispielsweise im Umfeld eines Arbeitskorbs einer Hubarbeitsbühne, zu schaffen.

Die Aufgabe wird durch die in dem unabhängigen Patentanspruch 1 angegebenen Merkmale gelöst. Vorteilhafte Weiterbildungen der Erfindung sind den Unteransprüchen zu entnehmen.

Die vorliegende Erfindung schafft ein Abstandsmesssystem für ein Fahrzeug, wobei das Abstandsmesssystem eine Messeinheit zum berührungslosen Bestimmen eines Abstands zu einem Objekt aufweist, und die Messeinheit folgendes umfasst:
eine Sensoreinheit, welche dazu ausgebildet ist, ein Signal auszusenden und ein von dem Objekt reflektiertes Signal zu empfangen;
eine Auswerteeinheit, welche aus den von der Sensoreinheit ausgesendeten und empfangenen Signalen einen Abstand zwischen der Messeinheit und dem Objekt bestimmt; und
eine Signalumlenkvorrichtung, welche im Bereich der Sensoreinheit angeordnet ist, mit einer Reflektorfläche, welche das von der Sensoreinheit ausgesendete Signal in eine von der Ausbreitungsrichtung des Signals abweichende Richtung, insbesondere um einen im Wesentlichen rechten Winkel zur Ausbreitungsrichtung des Signals, in Richtung des Objekts umlenkt.

Das von der Sensoreinheit ausgesendete Signal wird beim Auftreffen auf das Objekt (Hindernis) von diesem reflektiert. Dabei ist es von Vorteil, das von der Sensoreinheit ausgesendete Signal in seiner Ausbreitungsrichtung umzulenken, insbesondere dann, wenn ein Abstand zu einem Objekt bestimmt werden soll, welches sich oberhalb des Abstandsmesssystems befindet. Denn, hierfür muss die Sensoreinheit an sich nicht nach oben (in Richtung des zu erfassenden Objekts bzw. Hindernisses) ausgerichtet sein, sondern in horizontaler Richtung, d. h. die Sensoreinheit ist so ausgerichtet, dass die Signale von der Sensoreinheit in horizontaler Richtung ausgesendet werden. Dadurch kann (Regen)wasser ablaufen und bleibt nicht auf der Sensoreinheit stehen. Die Sensoreinheit wird somit auch bei Regen nicht in ihrer Funktionalität und Verfügbarkeit beeinträchtigt.

Aus den von der Sensoreinheit ausgesendeten und empfangenen Signalen wird von der Auswerteeinheit, welche aus einer Rechnereinheit, beispielsweise einem Mikrocontrollersystem, besteht, ein Abstandswert berechnet und das Resultat in vorteilhafter Weise, beispielsweise per Feldbusnachricht (CAN, LIN oder ähnlich) an eine Steuerung, beispielsweise an eine Fahrzeug- oder Maschinensteuerung, ausgegeben bzw. weitergegeben. Die Steuerung kann dann anhand des gemessenen Abstandswertes entsprechend reagieren, beispielsweise Bewegungen des Fahrzeugs oder der Maschine stoppen, verlangsamen oder dergleichen. Wird das Abstandsmesssystem beispielsweise an einer Hubarbeitsbühne oder einer Feuerwehrdrehleiter eingesetzt, so kann die Steuerung eine sicherheitsgerichtete Steuerung sein.

Die Signalumlenkvorrichtung ist in vorteilhafter Weise direkt vor der Sensoreinheit oder in einem (definierten) Abstand in Messrichtung, d. h. in Sende- und Empfangsrichtung gesehen, dazu angeordnet. Bei der Abstandsmessung muss der Abstand zur Reflektorfläche, welche das von der Sensoreinheit ausgesendete Signal in Richtung des Objekts bzw. des Hindernisses umlenkt, mit eingerechnet werden. Allerdings ist dies bei der Konstruktion des Abstandmesssystems bekannt und kann beispielsweise als Konstante in der Auswerteeinrichtung oder der Sensoreinheit hinterlegt (beispielsweise abgespeichert) werden. Als Ausbreitungsrichtung der von der Sensoreinheit ausgesendeten und empfangenen Signalen ist im Zusammenhang mit der vorliegenden Erfindung die Messrichtung, bzw. anders ausgedrückt der jeweilige Richtungsvektor des ausgesendeten bzw. empfangenen Signals gemeint. Die Signalumlenkvorrichtung lenkt das ausgesendete Signal derart in Richtung des Objekts um, sodass der Richtungsvektor des auf dem Objekt auftreffenden Signals im Wesentlichen senkrecht auf dem Richtungsvektor des von der Sensoreinheit ausgesendeten Signals steht. Dabei sendet und empfängt die Sensoreinheit die Signale in entgegengesetzter Richtung.

Entsprechend Ausführungsbeispielen lenkt die Reflektorfläche das von dem Objekt reflektierte Signal in eine von der Ausbreitungsrichtung des reflektierten Signals abweichende Richtung, insbesondere um einen im Wesentlichen rechten Winkel zur Ausbreitungsrichtung des reflektierten Signals, in Richtung der Sensoreinheit um. Die Signalumlenkvorrichtung lenkt das von dem Objekt reflektierte Signal derart in Richtung der Sensoreinheit um, sodass der Richtungsvektor des von dem Objekt reflektierten Signals im Wesentlichen senkrecht auf dem Richtungsvektor des von der Sensoreinheit empfangenen Signals steht.

Entsprechend Ausführungsbeispielen umfasst das Abstandsmesssystem ein Messmodul, an oder in welchem die Messeinheit angeordnet ist. Vorzugsweise ist das Messmodul länglich ausgebildet, beispielsweise als Messbalken, welcher in seinem Querschnitt rund, quadratisch, rechteckig oder ähnlich sein kann. Die Messeinheit kann dabei an dem Messmodul angeordnet sein, beispielsweise daran angeschraubt, angeklebt, daran gesteckt oder ähnlich. Möglich ist jedoch auch eine integrierte Variante, d. h. die Messeinheit oder Teile davon, wie beispielsweise die Auswerteeinheit und/oder die Sensoreinheit, sind in dem Messmodul eingebaut bzw. integriert.

Entsprechend Ausführungsbeispielen ist die Signalumlenkvorrichtung lösbar, insbesondere werkzeuglos lösbar, an der Messeinheit oder an dem Messmodul befestigt. Die Signalumlenkvorrichtung kann an der Messeinheit oder an dem Messmodul beispielsweise angeklickt (Klickverbindung), geklemmt, gesteckt oder mittels einer Klettverbindung oder ähnlich befestigt sein. Dies ist insbesondere dann von Vorteil, wenn die Signalumlenkvorrichtung defekt ist, denn dann kann diese einfach und gegebenenfalls auch werkzeuglos ausgetauscht werden. Möglich ist hierbei jedoch auch, dass Signalumlenkvorrichtung an der Messeinheit oder an dem Messmodul angeschraubt ist.

Erfindungsgemäß umfasst die Signalumlenkvorrichtung eine Halterung und eine Reflektoreinheit, welche lösbar, insbesondere werkzeuglos lösbar, miteinander verbunden sind. Die Halterung kann dabei ebenfalls lösbar an der Messeinheit oder an dem Messmodul befestigt sein, denkbar ist jedoch auch eine feste Montage an dem Messmodul oder eine an dem Gehäuse des Messmoduls vorgeformte Halterungsmechanik, d. h. eine in das Gehäuse des Messmoduls integrierte Halterungsmechanik. Die Reflektoreinheit, welche die Reflektorfläche umfasst, ist ebenfalls lösbar an der Halterung angeordnet. Die Reflektoreinheit kann beispielsweise angeklickt (Klickverbindung), geklemmt, gesteckt oder mittels einer Klettverbindung oder ähnlich befestigt sein. Ist die Reflektoreinheit beispielsweise defekt, dann kann diese in vorteilhafter Weise einfach von der Halterung gelöst und ausgetauscht werden.

Entsprechend Ausführungsbeispielen ist die Reflektoreinheit verschiebbar, insbesondere zur Seite hin verschiebbar, an der Halterung angeordnet. Dadurch kann in einer einfachen Art und Weise die Messrichtung der Abstandsmessung verändert werden bzw. die Messrichtung des Messmoduls oder der Messeinheit verändert werden und so an die Gegebenheiten des Fahrzeugs bzw. der Maschine angepasst werden. D. h., soll beispielsweise ein Messmodul mit zwei Messeinheiten an dem Fahrzeug oder an der Maschine für zwei unterschiedliche Messrichtungen verwendet werden, so kann beispielsweise bei der ersten Messeinheit die Reflektoreinheit direkt vor die Sensoreinheit geschoben werden, sodass das von der Sensoreinheit der ersten Messeinheit ausgesendete Signal in Richtung des Objekts bzw. des Hindernisses umgelenkt wird, wohingegen bei der zweiten Messeinheit die Reflektoreinheit zur Seite geschoben wird, sodass das von der Sensoreinheit der zweiten Messeinheit ausgesendete Signal nicht umgelenkt wird (und dementsprechend eine andere Messrichtung aufweist).

Entsprechend Ausführungsbeispielen weist die Halterung eine Arretierung zum Feststellen der Reflektoreinheit auf und/oder die Reflektoreinheit (52) weist eine Arretierung zum Feststellen derselben auf. Dadurch wird in vorteilhafter Weise ein selbsttätiges Lösen der Reflektoreinheit während eines Betriebs des Fahrzeugs bzw. der Maschine verhindert. In vorteilhafter Weise ist die Arretierung bzw. Verriegelung per Fingerdruck einfach und schnell betätigbar, sodass die Reflektoreinheit einfach von der Halterung gelöst und ausgetauscht werden kann. Die Arretierung kann dabei an der Halterung und/oder an der Reflektoreinheit angeordnet sein.

Erfindungsgemäß weist die Signalumlenkvorrichtung zwischen der Halterung und der Reflektoreinheit mindestens eine Öffnung oder mindestens einen Spalt auf. Dadurch bleibt in vorteilhafter Weise beispielsweise kein (Regen)wasser in der Signalumlenkvorrichtung stehen, insbesondere dann, wenn die Messeinheit bzw. das Abstandsmesssystem so ausgerichtet ist, dass ein Objekt (Hindernis), welches sich oberhalb des Abstandsmesssystems befindet, erfasst werden soll. Denn, hierfür ist die Sensoreinheit in horizontaler Richtung ausgerichtet, d. h. die Sensoreinheit ist so ausgerichtet, dass die Signale von der Sensoreinheit in horizontaler Richtung ausgesendet und in horizontaler Richtung empfangen werden, wohingegen die Reflektoreinheit der Signalumlenkvorrichtung wie ein Trichter wirken kann, sodass ohne zumindest eine Öffnung oder ohne zumindest einen Spalt (Regen)wasser darin stehenbleiben kann und die Sensoreinheit in ihrer Funktionalität und Verfügbarkeit beeinträchtigen würde.

Entsprechend Ausführungsbeispielen weist die Sensoreinheit einen Sensorkopf auf, welcher dazu ausgebildet ist, das Signal auszusenden und das von dem Objekt reflektierte Signal zu empfangen. Möglich ist hierbei ein Sensorkopf, der sowohl Signale aussenden als auch (zeitlich versetzt) empfangen kann, oder aber ein Sensorkopf mit einer getrennten Sende- und Empfangseinheit, wobei hierbei keine Umschaltung zwischen Senden und Empfangen notwendig ist.

Entsprechend Ausführungsbeispielen sind die von der Sensoreinheit ausgesendeten und empfangenen Signale Ultraschallsignale, Mikrowellensignale oder optische Signale. Als Mikrowellensignale sind beispielsweise Radarsignale oder ähnlich möglich, als optische Signale können Licht (beispielsweise Infrarotlicht) oder Laser oder dergleichen verwendet werden. Die Reflektorfläche der Signalumlenkvorrichtung ist entsprechend der verwendeten Messtechnik (Signale) matt, glänzend, verspiegelt oder ähnlich ausgeführt.

Entsprechend Ausführungsbeispielen umfasst das Messmodul mehrere Messeinheiten, welche mittels einer Kabelverbindung elektrisch miteinander verbindbar sind. Die Messeinheiten können dabei in oder an dem Messmodul angeordnet sein, beispielsweise daran angeschraubt, angeklebt, gesteckt oder aber auch darin ganz oder teilweise integriert sein, d. h. dass Messeinheiten oder Teile davon, wie beispielsweise Auswerteeinheiten und/oder Sensoreinheiten, in dem Messmodul eingebaut bzw. integriert sind. Aus den von den Sensoreinheiten ausgesendeten und empfangenen Signalen werden von den Auswerteeinheiten, welche jeweils aus einer Rechnereinheit, beispielsweise einem Mikrocontrollersystem, bestehen, Abstandswerte berechnet und das Resultat mittels Kabelverbindung, beispielsweise per Feldbusnachricht (CAN, LIN oder ähnlich) an eine Steuerung, beispielsweise an eine Fahrzeug- oder Maschinensteuerung, ausgegeben bzw. weitergegeben. Die Messeinheiten können dabei eine jeweilige Abstandsmessung entweder gleichzeitig oder zeitversetzt, d. h. nacheinander bzw. in zeitlicher Abfolge, oder aber prioritätsbasierend durchführen. Dadurch, dass die Messeinheiten miteinander elektrisch verbunden sind und somit Daten per Feldbusnachrichten untereinander austauschen können, ist es möglich, dass sowohl eine gleichzeitige als auch eine zeitversetzte oder aber eine prioritätsbasierte (d. h. beispielsweise abhängig von der Anzahl oder Anordnung der Messeinheiten) Messung bzw. Messungen von Abständen durchgeführt werden.

Entsprechend Ausführungsbeispielen weisen die Messeinheiten eines Messmoduls eine gemeinsame Auswerteeinheit auf. Sind beispielsweise zwei oder drei Messeinheiten in oder an einem Messmodul angeordnet, so ist es durchaus möglich, dass die Sensoreinheiten an eine gemeinsame Auswerteeinheit elektrisch angeschlossen sind. Hierdurch wird in vorteilhafter Weise das Messmodul in Summe kostengünstiger, da Elektronikkomponenten eingespart werden. Denkbar ist es jedoch auch, dass mehr als zwei oder drei Messeinheiten an eine gemeinsame Auswerteeinheit elektrisch angeschlossen sind. Vorteilhaft und kostengünstig ist es, wenn alle in oder an einem Messmodul angeordneten Messeinheiten an ein und derselben Auswerteeinrichtung eines Messmoduls elektrisch angeschlossen sind.

Entsprechend Ausführungsbeispielen sind die Messeinheiten derart an oder in dem Messmodul angeordnet, sodass diese Abstände zu demselben Objekt oder Abstände zu verschiedenen Objekten bestimmen. Die Messeinheiten können in ein und derselben Erfassungsrichtung in oder an einem Messmodul angeordnet sein, sodass Abstände entweder zu ein und demselben Objekt (Hindernis) oder Abstände zu verschiedenen Objekten (unterschiedliche Hindernisse) bestimmt werden. Andererseits müssen die Messeinheiten nicht zwangsläufig in ein und derselben Erfassungsrichtung in oder an einem Messmodul angeordnet sein, sondern können unterschiedliche Erfassungsrichtungen aufweisen und somit Abstände zu verschiedenen Objekten (unterschiedliche Hindernisse) bestimmen.

Entsprechend Ausführungsbeispielen umfasst das Abstandsmesssystem mehrere Messmodule, welche mittels einer elektrischen Kabelverbindung oder einer drahtlosen Verbindung miteinander verbindbar sind. Messmodule sind in einem Abstandsmesssystem mittels einer elektrischen Kabelverbindung oder einer drahtlosen Verbindung kaskadiert anordenbar, d. h. können hintereinandergeschaltet bzw. miteinander verbunden werden, sodass das Abstandsmesssystem aus zwei oder mehreren Messmodulen besteht. Die Messmodule bzw. die Messeinheiten bzw. die in den Messeinheiten angeordneten Auswerteeinheiten können beispielsweise mittels eines Feldbussystems (CAN, LIN oder ähnlich) miteinander kommunizieren und/oder Abstandswerte an eine Steuerung, beispielsweise an eine Fahrzeug- oder Maschinensteuerung, ausgeben bzw. weitergeben. Dazu ist das Feldbussystem des Abstandmesssystems in vorteilhafterweise mit dem Feldbussystem der Maschine bzw. des Fahrzeugs elektrisch verbunden. Diese Kaskadierung ist von Vorteil, da das Abstandsmesssystem sehr flexibel in seinem Aufbau gestaltet bzw. konfiguriert werden kann. Es kann an unterschiedliche Fahrzeuge oder Maschinen individuell angepasst werden, d. h. dass beispielsweise die Anzahl der Messmodule oder die Länge der Kabelverbindungen zwischen den einzelnen Messmodulen frei und sehr flexibel gestaltet werden kann.

Wird eine drahtlose Verbindung der Messmodule verwendet, so umfasst ein Messmodul weiterhin mindestens einen Akku, um die Stromversorgung der einzelnen Messeinheiten sicherzustellen. Dabei kommunizieren die einzelnen Messmodule in einem Abstandsmesssystem untereinander per Funksignale, beispielsweise WLAN, Bluetooth oder vergleichbar. Eine drahtlose Verbindung der Messmodule ist in Bezug auf eine Anbringung an einem Fahrzeug oder einer Maschine von Vorteil, da hier beispielsweise durch die nicht benötigte Kabelverlegung eine noch flexiblere Anpassung an die Gegebenheiten des Fahrzeugs bzw. der Maschine möglich ist.

Die Messmodule können dabei eine jeweilige Abstandsmessung entweder gleichzeitig oder zeitversetzt, d. h. nacheinander bzw. in zeitlicher Abfolge, oder aber prioritätsbasierend durchführen. Dadurch, dass die Messmodule miteinander elektrisch verbunden sind (entweder kabelgebunden oder drahtlos) und somit Daten untereinander austauschen können, ist es möglich, dass sowohl eine gleichzeitige als auch eine zeitversetzte oder aber eine prioritätsbasierte (d. h. beispielsweise abhängig von der Anzahl oder Anordnung der Messmodule) Messung bzw. Messungen von Abständen durchgeführt werden.

Ein weiteres Ausführungsbeispiel bezieht sich auf ein Fahrzeug mit einem Abstandsmesssystem, wie es oben skizziert wurde. Entsprechend Ausführungsbeispielen ist das Fahrzeug eine mobile Bau- oder Arbeitsmaschine. Dies können beispielsweise Baufahrzeuge, Baumaschinen (Bagger, Krane, ...), Straßenbaumaschinen (Fertiger, Beschicker, Verdichter (Walze), ...) oder sonstige mobile Fahrzeuge oder Maschinen sein. Denkbar sind in diesem Zusammenhang auch Fahrzeuge, welche auf Flughäfen eingesetzt werden (bspw. eine fahrbare Treppe, welche an ein stehendes Flugzeug heranfährt, oder ähnlich). Eingesetzt werden kann das erfindungsgemäße Abstandmesssystem an allen Fahrzeugen und Maschinen, welche sich während des Betriebs einem Hindernis oder Objekt nähern und es eine Kollision zu vermeiden gilt bzw. ein Abstand zu einem Hindernis oder Objekt gemessen, erfasst oder bestimmt werden soll.

Entsprechend Ausführungsbeispielen ist das Fahrzeug eine Hubarbeitsbühne oder eine Feuerwehrdrehleiter, mit einem an dem Fahrzeug beweglich angeordneten Arbeitskorb, wobei mindestens ein Abstandsmesssystem an dem Arbeitskorb angeordnet ist. Bei der Hubarbeitsbühne handelt es sich beispielsweise um eine Arbeitsbühne mit einem teleskopierbaren Kranmechanismus oder um eine sogenannte Scherenbühne. Feuerwehrdrehleitern weisen oftmals auch einen Arbeitskorb auf, welcher mit der ausfahrbaren Leiter bewegt wird. Das Abstandsmesssystem ist dabei an irgendeiner Stelle am Arbeitskorb angeordnet und misst Abstände zu einem oder mehreren Objekten bzw. Hindernissen.

Entsprechend Ausführungsbeispielen weist der an dem Fahrzeug beweglich angeordnete Arbeitskorb einen Boden und eine Reling auf, und es ist mindestens ein Abstandsmesssystem an dem Boden und/oder an der Reling angeordnet oder in den Boden und/oder in die Reling integriert. Wird das mindestens eine Abstandmesssystem an dem Boden und/oder an der Reling bzw. an dem Geländer befestigt, so kann diese Befestigung lösbar sein, insbesondere werkzeuglos lösbar, beispielsweise mittels einer Klettverbindung, einer Klemmvorrichtung, einer Steckvorrichtung, einer Klebevorrichtung oder dergleichen. Alternativ kann das Abstandmesssystem an dem Boden und/oder an der Reling bzw. an dem Geländer beispielsweise geschraubt, genietet oder anderweitig befestigt sein. Auch eine Anordnung des mindestens einen Abstandsmesssystems oder von Teilen des mindestens einen Abstandsmesssystems in dem Boden und/oder in der Reling bzw. in dem Geländer ist möglich. Gerade die einzelnen Teile der Reling bzw. des Geländers eines Arbeitskorbs können wie ein Messmodul betrachtet werden, in welchen die Messeinheiten oder zumindest Teile davon eingebaut bzw. integriert sind, sodass in vorteilhafter Weise weitere Mechaniken in Form von separaten Messmodulen entfallen.

Ausführungsbeispiele der vorliegenden Erfindung werden anhand der nachfolgenden Zeichnungen erläutert. Es zeigen:
- Fig. 1a,b: eine schematische Darstellung des Funktionsprinzips des Abstandsmesssystems;
- Fig. 2: eine schematische Darstellung (Ausschnitt) eines Messmoduls;
- Fig. 3: eine schematische Darstellung eines Messmoduls;
- Fig. 4: eine schematische Darstellung einer Reflektoreinheit und einer Halterung; und
- Fig. 5: eine Hubarbeitsbühne mit einem Abstandsmesssystem.

Bevor nachfolgend Ausführungsbeispiele der vorliegenden Erfindung anhand der Figuren im Detail erläutert werden, sei darauf hingewiesen, dass gleichwirkende Elemente mit gleichen Bezugszeichen versehen sind, so dass die Beschreibung derer aufeinander anwendbar bzw. austauschbar ist. Bei der Abstandsmessung muss der Abstand zur Reflektorfläche 55, welche das von der Sensoreinheit 30 ausgesendete Signal S11 in Richtung des Objekts 70 bzw. des Hindernisses 70 umlenkt, mit eingerechnet werden. Da dieser Abstandswert bei der Konstruktion des Abstandmesssystems 10 bekannt sein dürfte, kann der Wert beispielsweise als Konstante in der Auswerteeinrichtung 40 oder der Sensoreinheit 30 hinterlegt (beispielsweise abgespeichert) werden.

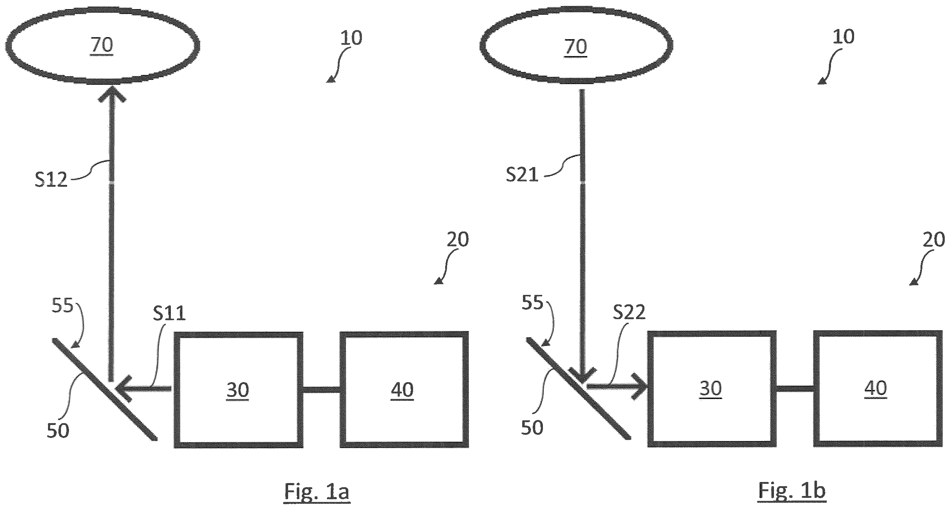

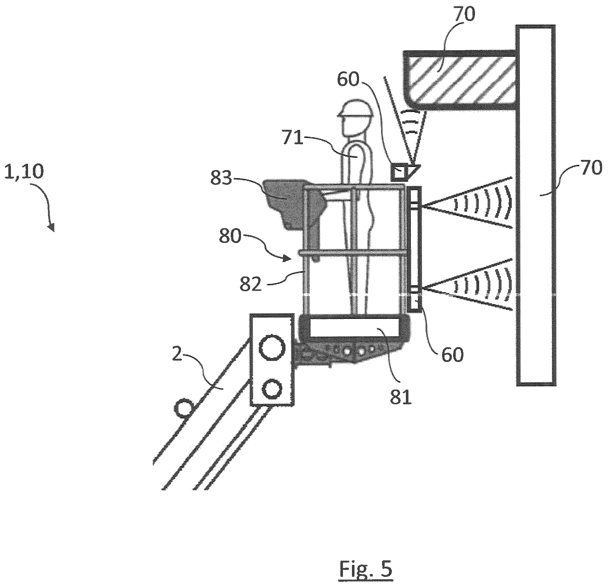

Figur 1a und 1b zeigen ein Abstandsmesssystem 10 jeweils in schematischer Darstellung, um die prinzipielle Funktionsweise der Abstandsmessung zu erläutern. Das Abstandsmesssystem 10 weist eine Messeinheit 20 zum berührungslosen Bestimmen eines Abstands zu einem Objekt 70 (ein Hindernis wie beispielsweise eine Wand, ein Dach, ein Dachvorsprung oder ähnlich) auf, wobei die Messeinheit 20 im Wesentlichen eine Sensoreinheit 30, eine Auswerteeinheit 40 und eine Signalumlenkvorrichtung 50 umfasst. Die Sensoreinheit 30 ist dazu ausgebildet, ein Signal S11,S12 auszusenden und ein von dem Objekt 70 reflektiertes Signal S21,S22 zu empfangen. Die Auswerteeinheit 40 bestimmt aus den von der Sensoreinheit 30 ausgesendeten Signalen S11,S12 und empfangenen Signalen S21,S22 einen Abstand zwischen der Messeinheit 20 und dem Objekt 70, beispielsweise anhand von der Signallaufzeit, d. h. anhand vom der zeitlichen Differenz zwischen den ausgesendeten Signalen S11,S12 und den empfangenen Signalen S21,S22. Die Signalumlenkvorrichtung 50, welche im Bereich der Sensoreinheit 30 angeordnet ist, weist eine Reflektorfläche 55 auf, welche in einem Winkel von ca. 45 ° zur Sensoreinheit 30 steht, sodass das von der Sensoreinheit 30 ausgesendete Signal S11 beim Auftreffen auf die Reflektorfläche 55 in eine von der Ausbreitungsrichtung des Signals S11 abweichende Richtung, insbesondere um einen im Wesentlichen rechten Winkel zur Ausbreitungsrichtung des Signals S11, in Richtung des Objekts 70 umgelenkt wird. Dabei kann der Winkel, in welchen die Reflektorfläche 55 zur Sensoreinheit 30 steht, einen Bereich von ca. 40 °... 50 ° oder einen Bereich von ca. 30 °... 50 ° haben. Das umgelenkte Signal S12 wird nun beim Auftreffen auf das Objekt 70 an diesem reflektiert und beim Auftreffen auf die Reflektorfläche 55 in eine von der Ausbreitungsrichtung des reflektierten Signals S21 abweichende Richtung, insbesondere um einen im Wesentlichen rechten Winkel zur Ausbreitungsrichtung des reflektierten Signals S21, in Richtung der Sensoreinheit 30 umgelenkt. Das von der Reflektorfläche 55 umgelenkte Signal S22 trifft nun auf die Sensoreinheit 30 und wird dort von einem nicht dargestellten Sensorkopf 31 empfangen. Der Sensorkopf 31 kann dazu ausgebildet sein, das Signal S11 auszusenden und das von dem Objekt 70 reflektierte und von der Signalumlenkvorrichtung 50 umgelenkte Signal S22 zu empfangen. Möglich ist hierbei ein Sensorkopf, der sowohl Signale aussenden als auch (zeitlich versetzt) empfangen kann, oder aber ein Sensorkopf mit einer getrennten Sende- und Empfangseinheit, wobei hierbei keine Umschaltung zwischen Senden und Empfangen notwendig ist. Beispielsweise kann ein Ultraschall-Sensorkopf verwendet werden, wobei sich die Ultraschallwellen "keulenförmig" ausbreiten, wie beispielsweise in Figur 5 schematisch dargestellt. Diese "keulenförmige" Ausbreitung spielt aber bei der Signalausbreitung auf dem kurzen Weg (Abstand) von der Sensoreinheit 30 bzw. des Sensorkopfes 31 zur Reflektorfläche 55 eine eher weniger zu beachtende Rolle, da sich die Ultraschallkeule auf dem kurzen Weg (Abstand) noch nicht derart in ihrem Querschnitt ausbreiten konnte, sodass dies eine Messung, d. h. eine Abstandsmessung, negativ beeinflusst.

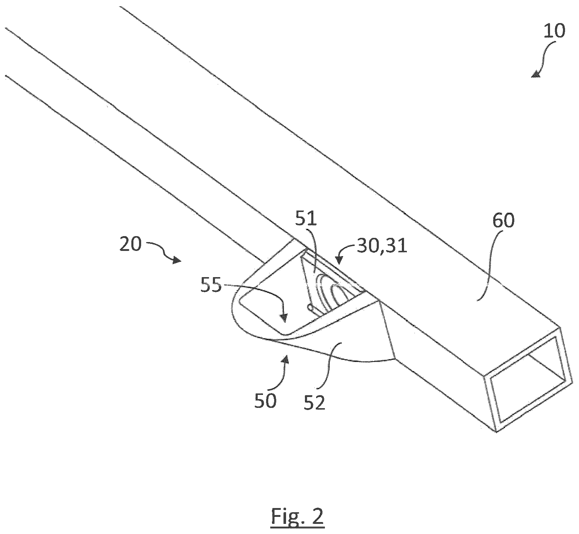

Figur 2 zeigt eine schematische Darstellung (Ausschnitt) eines Messmoduls 60, mit einer teilweise darin angeordneten Messeinheit 20. Das Messmodul 60 ist länglich ausgebildet, beispielsweise als Messbalken, und gemäß Fig. 2 in seinem Querschnitt rechteckig ausgeformt. Die Auswerteeinheit 40 und die Sensoreinheit 30 (mit dem Sensorkopf 31) sind dabei in dem Messmodul 60 angeordnet, d. h. im Messmodul 60 eingebaut bzw. integriert. An dem Messmodul 60 ist die Signalumlenkvorrichtung 50 angeordnet, und zwar im Bereich vor der Sensoreinheit 30. Wie in Figur 2 dargestellt, so besteht die Signalumlenkvorrichtung 50 aus einer Halterung 51 und einer Reflektoreinheit 52, welche lösbar, insbesondere werkzeuglos lösbar, miteinander verbunden sind. Die Halterung 51 ist dabei entweder fest oder ebenfalls lösbar an dem Gehäuse des Messmoduls 60 befestigt. Die Reflektoreinheit 52, welche die Reflektorfläche 55 umfasst, ist dabei lösbar an der Halterung 51 angeordnet, beispielsweise aufgesteckt.

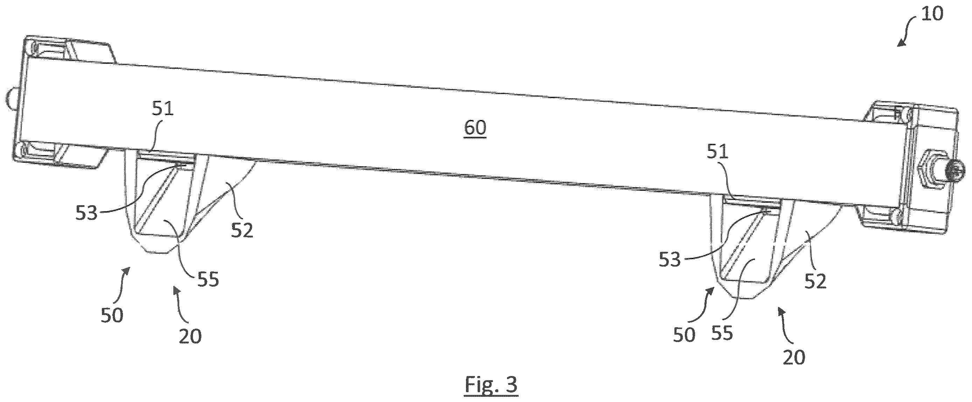

Figur 3 zeigt eine schematische Darstellung eines Messmoduls 60, mit zwei teilweise darin angeordneten Messeinheiten 20. An den seitlichen Enden des Messmoduls 60 sind jeweils Steckverbinder angeordnet, um weiter Messmodule 60 mittels einer elektrischen Kabelverbindung kaskadiert anzuordnen, d. h. hintereinanderzuschalten (Daisy Chain) bzw. miteinander zu verbinden, sodass ein Abstandsmesssystem 10 aus zwei oder mehreren Messmodulen entsteht. Ähnlich wie bereits zu Figur 2 beschrieben, so ist das Messmodul 60 länglich ausgebildet und in seinem Querschnitt rechteckig ausgeformt. Hierbei ist anzumerken, dass das Messmodul 60 in seinem Querschnitt auch rund, quadratisch oder ähnlich sein kann. Beispielsweise hat das Messmodul 60 eine Länge von 60 cm, bzw. eine Länge in einem Bereich von ca. 40 cm ... 100 cm oder in einem Bereich von ca. 40 cm ... größer 100 cm. Die Auswerteeinheit 40 und die Sensoreinheit 30 (in Figur 3 nicht dargestellt) sind dabei in dem Messmodul 60 angeordnet, d. h. im Messmodul 60 eingebaut bzw. integriert. An dem Messmodul 60 ist die Signalumlenkvorrichtung 50 angeordnet, bestehend aus einer Halterung 51 und einer Reflektoreinheit 52, welche lösbar, insbesondere werkzeuglos lösbar, miteinander verbunden sind. Zwischen der Halterung 51 und der Reflektoreinheit 52 weist die Signalumlenkvorrichtung 50 eine Öffnung 53 bzw. einen Spalt 53 auf, sodass beispielsweise kein (Regen)wasser in der Signalumlenkvorrichtung 50 stehenbleibt, wenn die Messeinheit 20 bzw. das Abstandsmesssystem 10 so ausgerichtet ist, dass ein Objekt 70, welches sich oberhalb des Abstandsmesssystems 10 befindet, erfasst werden soll.

Wird zur Abstandsmessung beispielsweise ein Ultraschall-Sensorkopf verwendet, so breiten sich die Ultraschallwellen in der Regel "keulenförmig" aus, wie beispielsweise in Figur 5 schematisch dargestellt und bereits oben zur Figur 1 kurz beschrieben. Die "keulenförmige" Ausbreitung der Ultraschallwellen ist bei der Anordnung der Messeinheiten 20 in oder an einem Messmodul 60 zu berücksichtigen, da es gegebenenfalls (sollte der Abstand zwischen zwei Messeinheiten 20 beispielsweise zu gering sein) zu Signalüberlappungen kommen kann, d. h. dass sich die ausgesendeten und/ reflektierten Ultraschallkeulen zweier Messeinheiten 20 überlappen können. Eine derartige Überlappung von Ultraschallkeulen tritt (wie Praxistests gezeigt haben) beispielsweise ab einem Messabstand (zwischen Messeinheit 20 und Objekt 70) von ca. 1,80 m auf, wenn zwei benachbarte Messeinheiten 20 in einem Abstand von ca. 40 cm in oder an einem Messmodul 60 angeordnet sind. Andererseits bietet die "keulenförmige" Ausbreitung von Ultraschallwellen den Vorteil, dass ein großer Erfassungsbereich des Abstandsmesssystems 10 vorliegt, d. h. möglichst viele Objekte 70 bzw. Hindernisse 70 von dem Abstandsmesssystem 10 erfasst werden.

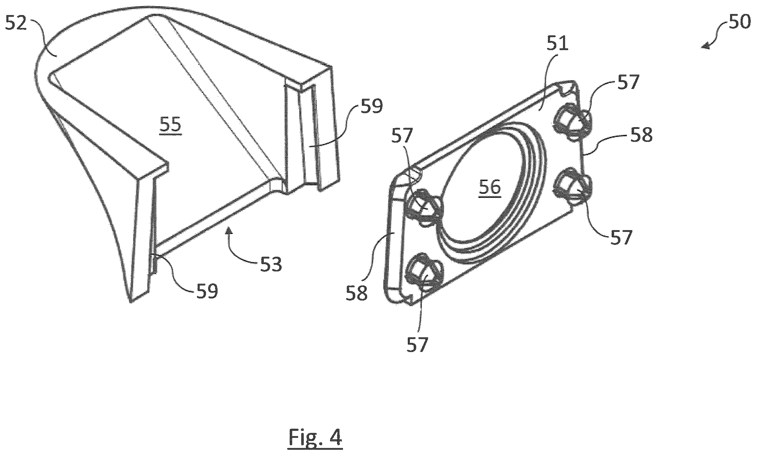

Figur 4 zeigt eine schematische Darstellung einer Reflektoreinheit 52 und einer dazugehörigen Halterung 51. Die Halterung 51 ist gemäß Figur 4 als lösbare Einheit dargestellt, mit einer Klickmechanik 57, mittels der die Halterung 51 lösbar an dem Messmodul 60 befestigt werden kann. Die Halterung 51 weist in der Mitte eine Öffnung 56 auf, welche für die (in Figur 4 nicht dargestellte) Sensoreinheit 30 benötigt wird. Durch die Öffnung 56 sendet die Sensoreinheit 30 das Signal S11,S12 aus und empfängt das von dem Objekt 70 reflektierte Signal S21,S22. Die Reflektoreinheit 52 umfasst die Reflektorfläche 55 und ist lösbar an der Halterung 51 anordenbar. Dazu weist die Reflektoreinheit 52 zwei seitliche und nach innen gerichtete Nuten 59 auf, wodurch die Reflektoreinheit 52 auf die seitlichen Kanten 58 der Halterung 51 aufgesteckt werden kann. Wie schon in Figur 3 dargestellt, so weist die Signalumlenkvorrichtung 50 eine Öffnung 53 bzw. einen Spalt 53 auf, wenn die Halterung 51 und die Reflektoreinheit 52 miteinander verbunden sind.

Figur 5 zeigt eine Hubarbeitsbühne 1, mit einem an der Hubarbeitsbühne 1 beweglich angeordneten Kranmechanismus 2 und einem Arbeitskorb 80, wobei der Arbeitskorb 80 mittels des Kranmechanismus 2 bewegt werden kann. Der Arbeitskorb 80 weist einen Boden 81 und eine Reling 82 sowie ein Steuerpult 83 auf, mittels welchem eine im Arbeitskorb befindliche Person 71 den Arbeitskorb bewegen kann. An dem Arbeitskorb 80 der Hubarbeitsbühne 1, besser gesagt an der Reling 82, ist ferner ein Abstandsmesssystem 10 angeordnet, welches aus zwei Messmodulen 60 besteht. Das Abstandsmesssystem 10 bzw. die beiden Messmodule 60 erfassen bzw. messen Abstände zu zwei Objekten 70, wie in Figur 5 dargestellt, zu einer Wand 70 und zu einem Dachvorsprung 70. Das Abstandmesssystem 10 bzw. die Messmodule 60, welche gemäß Figur 5 an der Reling 82 bzw. an dem Geländer 82 befestigt sind, können dabei lösbar befestigt sein, insbesondere werkzeuglos lösbar, beispielsweise mittels einer Klettverbindung, einer Klemmvorrichtung, einer Steckvorrichtung, einer Klebevorrichtung oder dergleichen. Alternativ kann das Abstandmesssystem 10 bzw. können die Messmodule 60 an der Reling 82 bzw. an dem Geländer 82 auch geschraubt, genietet oder anderweitig befestigt sein. Auch ist eine Anordnung des Abstandsmesssystems 10 oder von Teilen des Abstandsmesssystems 10 an oder in dem Boden 81 und/oder in der Reling 82 bzw. in dem Geländer 82 ist möglich.

Denkbar wäre es auch, dass an der Hubarbeitsbühne 1 gemäß Figur 5 noch weitere Messmodule 60 angeordnet sind, welche das Abstandsmesssystem 10 erweitern, da alle an der Hubarbeitsbühne 1 angeordneten Messmodule 60 diese mittels einer elektrischen Kabelverbindung oder einer drahtlosen Verbindung miteinander verbindbar sind. D. h., weitere Messmodule 60 können am Arbeitskorb 80, beispielsweise in oder am Boden 81, in oder an der Reling 82 oder aber auch in oder am Kranmechanismus 2 oder anderen, vorzugsweise beweglichen, Maschinenteilen angeordnet sein. Durch entsprechende Anordnung von einem oder mehrerer Messmodule 60 bzw. einem oder mehrerer Abstandsmesssysteme 10 an dem Fahrzeug oder an der Maschine entsteht ein "virtueller Raum", was bedeutet, dass beispielsweise alle oder zumindest die meisten Bereiche rund um den Arbeitskorb 80 einer Hubarbeitsbühne 1 von den Messmodulen 60 oder Abstandsmesssystemen 10 (falls mehrere separate Systeme 10 an dem Fahrzeug oder an der Maschine angeordnet sind) erfasst werden. Das ist vorteilhaft, da sich beispielsweise ein Arbeitskorb 80 einer Hubarbeitsbühne 1 in alle denkbaren Richtungen bewegen kann, wobei Hindernisse 70 nicht immer von der auf dem Arbeitskorb 80 stehenden Person eingesehen bzw. erkannt werden können. Die Messmodule 60 können dabei frei in ihrer Ausrichtung an der Maschine 1 angeordnet werden, d. h. senkrecht oder waagerecht sowie in allen Richtungen. Hier gibt es keine Beschränkungen. Alle Messmodule 60 können dabei elektrisch miteinander verbunden werden und somit ein gesamtes Abstandmesssystem 10 bilden. Dadurch, dass sich die Messmodule 60 mittels einer elektrischen Kabelverbindung oder einer drahtlosen Verbindung kaskadiert anordnen lassen, d. h. hintereinandergeschaltet (Daisy Chain) werden können bzw. miteinander verbunden werden können, ist es möglich, dass die Messmodule 60 bzw. die Messeinheiten 20 bzw. die in den Messeinheiten angeordneten Auswerteeinheiten 40 mittels eines Feldbussystems (CAN, LIN oder ähnlich) miteinander kommunizieren und/oder Abstandswerte an eine Steuerung, beispielsweise an eine Fahrzeug- oder Maschinensteuerung, ausgeben bzw. weitergeben. Dazu ist das Feldbussystem des Abstandmesssystems 10 in vorteilhafterweise mit dem Feldbussystem der Maschine bzw. des Fahrzeugs elektrisch verbunden. Eine wie oben beschriebene Kaskadierung von Messmodulen 60 ist von Vorteil, da das Abstandsmesssystem 10 sehr flexibel in seinem Aufbau gestaltet bzw. konfiguriert werden kann. Es kann an unterschiedliche Fahrzeuge oder Maschinen individuell angepasst werden, d. h. dass beispielsweise die Anzahl der Messmodule 60 oder die Länge der Kabelverbindungen zwischen den einzelnen Messmodulen frei und sehr flexibel gestaltet werden kann. Wird eine drahtlose Verbindung der Messmodule 60 verwendet, so kommunizieren die einzelnen Messmodule 60 in einem Abstandsmesssystem 10 untereinander per Funksignale, beispielsweise WLAN, Bluetooth oder vergleichbar. Eine drahtlose Verbindung der Messmodule 60 ist in Bezug auf eine Anbringung an einem Fahrzeug oder einer Maschine von Vorteil, da hier beispielsweise durch die nicht benötigte Kabelverlegung eine noch flexiblere Anpassung an die Gegebenheiten des Fahrzeugs bzw. der Maschine möglich ist.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Abstandsmesssystem (10) für ein Fahrzeug, wobei das Abstandsmesssystem eine Messeinheit (20) zum berührungslosen Bestimmen eines Abstands zu einem Objekt (70) aufweist, und die Messeinheit folgendes umfasst:
eine Sensoreinheit (30), welche dazu ausgebildet ist, ein Signal (S11, S12) in horizontaler Richtung auszusenden und ein von dem Objekt reflektiertes Signal (S21, S22) in horizontaler Richtung zu empfangen;
eine Auswerteeinheit (40), welche aus den von der Sensoreinheit ausgesendeten und empfangenen Signalen einen Abstand zwischen der Messeinheit und dem Objekt bestimmt; und
eine Signalumlenkvorrichtung (50), welche im Bereich der Sensoreinheit angeordnet ist, mit einer Reflektorfläche (55), welche das von der Sensoreinheit ausgesendete Signal in eine von der Ausbreitungsrichtung des Signals abweichende Richtung, insbesondere um einen im Wesentlichen rechten Winkel zur Ausbreitungsrichtung des Signals, in Richtung des Objekts umlenkt;
wobei die Signalumlenkvorrichtung (50) eine Halterung (51) und eine Reflektoreinheit (52) umfasst, welche lösbar, insbesondere werkzeuglos lösbar, miteinander verbunden sind, wobei die Signalumlenkvorrichtung (50) zwischen der Halterung (51) und der Reflektoreinheit (52), die wie ein Trichter wirkt, mindestens eine Öffnung (53) oder mindestens einen Spalt (53) aufweist; **dadurch gekennzeichnet, dass** bei dem Trichter ohne zumindest eine Öffnung oder ohne zumindest einen Spalt Wasser, insbesondere Regenwasser, darin stehenbleiben könnte, und
dass der Spalt oder die Öffnung (53) ausgebildet ist, so dass kein Wasser, insbesondere Regenwasser, in der Signalumlenkvorrichtung (50) stehenbleibt, wenn die Messeinheit (20) bzw. das Abstandsmesssystem (10) so ausgerichtet ist, dass das Objekt (70), welches sich oberhalb des Abstandsmesssystems (10) befindet, erfasst werden soll.

2. Abstandsmesssystem (10) nach Anspruch 1, **dadurch gekennzeichnet, dass** die Reflektorfläche (55) in einem festen Winkel in Bezug auf die Ausbreitungsrichtung des Signals und/oder die Sensoreinheit (30) angeordnet ist.

3. Abstandsmesssystem (10) nach Anspruch 1 oder 2, **dadurch gekennzeichnet, dass** die Reflektorfläche (55) in einem Winkel von 45° oder einem Winkel im Bereich von 40-50° oder im Bereich von 30-50° zur Sensoreinheit (30) und/oder zur Ausbreitungsrichtung angeordnet ist.

4. Abstandsmesssystem (10) nach einem der vorhergehenden Ansprüche, **dadurch gekennzeichnet, dass** das ausgelenkte Signal in eine abweichende Richtung ausgesendet wird, die lotrecht in Bezug auf einen Erdboden und/oder in einem Winkel im Bereich von 70-110 oder 50-140° in Bezug auf einen Erdboden ausgerichtet ist.

5. Abstandsmesssystem (10) nach einem der vorhergehenden Ansprüche, **dadurch gekennzeichnet, dass** die Reflektorfläche (55) das von dem Objekt (70) reflektierte Signal in eine von der Ausbreitungsrichtung des reflektierten Signals abweichende Richtung, insbesondere um einen im Wesentlichen rechten Winkel zur Ausbreitungsrichtung des reflektierten Signals, in Richtung der Sensoreinheit (30) umlenkt.

6. Abstandsmesssystem (10) nach einem der vorhergehenden Ansprüche, **dadurch gekennzeichnet, dass** das Abstandsmesssystem ein, vorzugsweise länglich ausgebildetes, Messmodul (60) umfasst, an oder in welchem die Messeinheit (20) angeordnet ist.

7. Abstandsmesssystem (10) nach einem der vorhergehenden Ansprüche, **dadurch gekennzeichnet, dass** die Signalumlenkvorrichtung (50) lösbar, insbesondere werkzeuglos lösbar, an der Messeinheit (20) oder an dem Messmodul (60) befestigt ist.

8. Abstandsmesssystem (10) nach einem der vorhergehenden Ansprüche, **dadurch gekennzeichnet, dass** die Reflektoreinheit (52) verschiebbar, insbesondere zur Seite hin verschiebbar, an der Halterung (51) angeordnet ist.

9. Abstandsmesssystem (10) nach einem der vorhergehenden Ansprüche, **dadurch gekennzeichnet, dass** die Halterung (51) eine Arretierung zum Feststellen der Reflektoreinheit (52) aufweist und/oder dass die Reflektoreinheit (52) eine Arretierung zum Feststellen derselben aufweist.

10. Abstandsmesssystem (10) nach einem der vorhergehenden Ansprüche, **dadurch gekennzeichnet, dass** die Sensoreinheit (30) einen Sensorkopf (31) aufweist, welcher dazu ausgebildet ist, das Signal auszusenden und das von dem Objekt reflektierte Signal zu empfangen.

11. Abstandsmesssystem (10) nach einem der vorhergehenden Ansprüche, **dadurch gekennzeichnet, dass** die von der Sensoreinheit (30) ausgesendeten und empfangenen Signale Ultraschallsignale, Mikrowellensignale oder optische Signale sind.

12. Abstandsmesssystem (10) nach einem der Ansprüche 6 bis 11, **dadurch gekennzeichnet, dass** das Messmodul (60) mehrere Messeinheiten (20) umfasst, welche mittels einer Kabelverbindung elektrisch miteinander verbindbar sind.

13. Abstandsmesssystem (10) nach Anspruch 12, **dadurch gekennzeichnet, dass** die Messeinheiten (20) eines Messmoduls (60) eine gemeinsame Auswerteeinheit (40) aufweisen.

14. Abstandsmesssystem (10) nach Anspruch 12 oder 13, **dadurch gekennzeichnet, dass** die Messeinheiten (20) derart an oder in dem Messmodul (60) angeordnet sind, sodass diese Abstände zu demselben Objekt oder Abstände zu verschiedenen Objekten bestimmen.

15. Abstandsmesssystem (10) nach einem der Ansprüche 6 bis 14, **dadurch gekennzeichnet, dass** das Abstandsmesssystem mehrere Messmodule (60) umfasst, welche mittels einer elektrischen Kabelverbindung oder einer drahtlosen Verbindung miteinander verbindbar sind.

16. Fahrzeug (1) mit einem Abstandsmesssystem (10) nach einem der vorhergehenden Ansprüche.

17. Fahrzeug (1) mit einem Abstandsmesssystem (10) nach einem der Ansprüche 1 bis 15, wobei das Fahrzeug eine mobile Bau- oder Arbeitsmaschine ist.

18. Fahrzeug (1) mit einem Abstandsmesssystem (10) nach einem der Ansprüche 1 bis 15, wobei das Fahrzeug eine Hubarbeitsbühne oder eine Feuerwehrdrehleiter ist, mit einem an dem Fahrzeug beweglich angeordneten Arbeitskorb (80), wobei mindestens ein Abstandsmesssystem (10) an dem Arbeitskorb angeordnet ist.

19. Fahrzeug (1) nach Anspruch 18, wobei der an dem Fahrzeug beweglich angeordnete Arbeitskorb (80) einen Boden (81) und eine Reling (82) aufweist und mindestens ein Abstandsmesssystem (10) an dem Boden und/oder an der Reling angeordnet ist oder in den Boden und/oder in die Reling integriert ist.

## Claims

1. A distance measurement system (10) for a vehicle, wherein the distance measurement system comprises a measurement unit (20) for non-contact determination of a distance to an object (70), and the measurement unit comprises:
a sensor unit (30) configured to emit a signal (S11, S12) in a horizontal direction and to receive a signal (S21, S22) reflected by the object in a horizontal direction;
an evaluation unit (40) determining a distance between the measurement unit and the object from the signals emitted and received by the sensor unit; and
a signal deflection apparatus (50) arranged in the area of the sensor unit with a reflector surface (55) deflecting the signal emitted by the sensor unit in a direction deviating from the propagation direction of the signal, in particular at an essentially right angle to the propagation direction of the signal, in the direction of the object;
wherein the signal deflection apparatus (50) comprises a holder (51) and a reflector unit (52) which are connected to each other in a releasable manner, in particular releasable without any tools, wherein the signal deflection apparatus (50) comprises at least one opening (53) or at least one gap (53) between the holder (51) and the reflector unit (52) which has the effect of a funnel; **characterized in that**
in the funnel without at least one opening or without at least one gap, water, in particular rain water, may remain therein, and
**in that** the gap or the opening (53) is configured such that no water, in particular no rain water, remains in the signal deflection apparatus (50), when the measurement unit (20) or the distance measurement system (10) is oriented such that the object (70) above the distance measurement system (10) is to be detected.

2. The distance measurement system (10) according to claim 1, **characterized in that** the reflector surface (55) is arranged at a fixed angle with respect to the propagation direction of the signal and/or the sensor unit (30).

3. The distance measurement system (10) according to claim 1 or 2, **characterized in that** the reflector surface (55) is arranged at an angle of 45 ° or at an angle in the range of 40 to 50 ° or in a range of 30 to 50 ° to the sensor unit (30) and/or to the propagation direction.

4. The distance measurement system (10) according to any of the preceding claims, **characterized in that** the deflected signal is emitted in a deviating direction, which is perpendicular with respect to the ground and/or in an angle in the range of 70 to 110 or 50 to 140 ° with respect to the ground.

5. The distance measurement system (10) according to any of the preceding claims, **characterized in that** the reflector surface (55) deflects the signal reflected by the object (70) in a direction deviating from the propagation direction of the reflected signal, in particular at an essentially right angle to the propagation direction of the reflected signal, in the direction of the sensor unit (30).

6. The distance measurement system (10) according to any of the preceding claims, **characterized in that** the distance measurement system includes a measurement module (60), preferably configured in a longitudinal manner, on or in which the measurement unit (20) is arranged.

7. The distance measurement system (10) according to any of the preceding claims, **characterized in that** the signal deflection apparatus (50) is mounted on the measurement unit (20) or on the measurement module (60) in a releasable manner, in particular releasable without any tools.

8. The distance measurement system (10) according to any of the preceding claims, **characterized in that** the reflector unit (52) is arranged on the holder (55) in a slidable manner, in particular slidable to the side.

9. The distance measurement system (10) according to any of the preceding claims, **characterized in that** the holder (51) comprises a lock for locking the reflector unit (52) and/or that the reflector unit (52) comprises a lock for locking the same.

10. The distance measurement system (10) according to any of the preceding claims, **characterized in that** the sensor unit (30) comprises a sensor head (31) configured to emit the signal and to receive the signal reflected by the object.

11. The distance measurement system (10) according to any of the preceding claims, **characterized in that** the signals emitted and received by the sensor unit (30) are ultrasound signals, microwave signals or optical signals.

12. The distance measurement system (10) according to any of claims 6 to 11, **characterized in that** the measurement module (60) comprises several measurement units (20) which can be electrically connected to one another by means of a cable connection.

13. The distance measurement system (10) according to claim 12, **characterized in that** the measurement units (20) of a measurement module (60) comprise a common evaluation unit (40).

14. The distance measurement system (10) according to claim 12 or 13, **characterized in that** the measurement units (20) are arranged on or in the measurement module (60) such that the same determine distances to the same object or distances to different objects.

15. The distance measurement system (10) according to any of claims 6 to 14, **characterized in that** the distance measurement system comprises several measurement modules (60) which can be connected to one another by means of an electric cable connection or a wireless connection.

16. A vehicle (1) with a distance measurement system (10) according to any of the preceding claims.

17. A vehicle (1) with a distance measurement system (10) according to any of claims 1 to 16, wherein the vehicle is a mobile construction or work machine.

18. A vehicle (1) with a distance measurement system (10) according to any of claims 1 to 16, wherein the vehicle is an elevating work platform or fire engine turntable ladder with a work cage (80) movably arranged on the vehicle, wherein at least one distance measurement system (10) is arranged on the work cage.

19. The vehicle (1) according to claim 18, wherein the work cage (80) arranged movably on the vehicle comprises a floor (81) and railings (82), and at least one distance measurement system (10) is arranged on the floor and/or on the railings or integrated in the floor and/or in the railings.

## Revendications

1. Système de mesure de distance (10) pour un véhicule, dans lequel le système de mesure de distance comprend une unité de mesure (20) destinée à déterminer, sans contact, une distance par rapport à un objet (70), et ladite unité de mesure comprend :
une unité de détection (30) conçue pour émettre un signal (S11, S12) dans une direction horizontale et pour recevoir, dans une direction horizontale, un signal (S21, S22) réfléchi par l'objet ;
une unité d'évaluation (40) qui détermine, à partir des signaux émis et reçus par l'unité de détection, une distance entre l'unité de mesure et l'objet ; et
un dispositif de déviation de signal (50) disposé dans la zone de l'unité de détection, comprenant une surface réflectrice (55) qui dévie le signal émis par l'unité de détection dans une direction différente de la direction de propagation du signal, en particulier d'un angle sensiblement droit par rapport à la direction de propagation du signal, en direction de l'objet ;
le dispositif de déviation de signal (50) comprenant un support (51) et une unité de réflecteur (52) qui sont reliés l'un à l'autre de manière amovible, en particulier de manière amovible sans outil, le dispositif de déviation de signal (50) présentant, entre le support (51) et l'unité de réflecteur (52) agissant comme un entonnoir, au moins une ouverture (53) ou au moins une fente (53) ; **caractérisé en ce que**,
dans ledit entonnoir, en l'absence d'au moins une ouverture ou d'au moins une fente, de l'eau, en particulier de l'eau de pluie, pourrait y stagner,
et **en ce que** la fente ou l'ouverture (53) est configurée de sorte qu'aucune eau, en particulier de l'eau de pluie, ne stagne dans le dispositif de déviation de signal (50) lorsque l'unité de mesure (20) ou le système de mesure de distance (10) est orienté de telle sorte que l'objet (70), qui se trouve au-dessus du système de mesure de distance (10), doit être détecté.

2. Système de mesure de distance (10) selon la revendication 1, **caractérisé en ce que** la surface réflectrice (55) est disposée selon un angle fixe par rapport à la direction de propagation du signal et/ou par rapport à l'unité de détection (30).

3. Système de mesure de distance (10) selon la revendication 1 ou 2, **caractérisé en ce que** la surface réflectrice (55) est disposée selon un angle de 45° ou selon un angle dans la plage de 40 à 50° ou dans la plage de 30 à 50° par rapport à l'unité de détection (30) et/ou par rapport à la direction de propagation.

4. Système de mesure de distance (10) selon l'une quelconque des revendications précédentes, **caractérisé en ce que** le signal dévié est émis dans une direction différente, orientée perpendiculairement au sol et/ou selon un angle dans la plage de 70 à 110° ou de 50 à 140° par rapport au sol.

5. Système de mesure de distance (10) selon l'une quelconque des revendications précédentes, **caractérisé en ce que** la surface réflectrice (55) dévie le signal réfléchi par l'objet (70) dans une direction différente de la direction de propagation du signal réfléchi, en particulier d'un angle sensiblement droit par rapport à la direction de propagation du signal réfléchi, en direction de l'unité de détection (30).

6. Système de mesure de distance (10) selon l'une quelconque des revendications précédentes, **caractérisé en ce que** le système de mesure de distance comprend un module de mesure (60), de préférence de forme allongée, sur ou dans lequel est disposée l'unité de mesure (20).

7. Système de mesure de distance (10) selon l'une quelconque des revendications précédentes, **caractérisé en ce que** le dispositif de déviation de signal (50) est fixé de manière amovible, en particulier de manière amovible sans outil, à l'unité de mesure (20) ou au module de mesure (60).

8. Système de mesure de distance (10) selon l'une quelconque des revendications précédentes, **caractérisé en ce que** l'unité de réflecteur (52) est agencée sur le support (51) de manière coulissante, en particulier de manière coulissante latéralement.

9. Système de mesure de distance (10) selon l'une quelconque des revendications précédentes, **caractérisé en ce que** le support (51) présente un moyen de verrouillage pour immobiliser l'unité de réflecteur (52) et/ou **en ce que** l'unité de réflecteur (52) présente un moyen de verrouillage pour son immobilisation.

10. Système de mesure de distance (10) selon l'une quelconque des revendications précédentes, **caractérisé en ce que** l'unité de détection (30) comprend une tête de capteur (31) conçue pour émettre le signal et recevoir le signal réfléchi par l'objet.

11. Système de mesure de distance (10) selon l'une quelconque des revendications précédentes, **caractérisé en ce que** les signaux émis et reçus par l'unité de détection (30) sont des signaux ultrasonores, des signaux micro-ondes ou des signaux optiques.

12. Système de mesure de distance (10) selon l'une des revendications 6 à 11, **caractérisé en ce que** le module de mesure (60) comprend plusieurs unités de mesure (20) qui peuvent être électriquement reliées entre elles au moyen d'une liaison par câble.

13. Système de mesure de distance (10) selon la revendication 12, **caractérisé en ce que** les unités de mesure (20) d'un module de mesure (60) présentent une unité d'évaluation (40) commune.

14. Système de mesure de distance (10) selon la revendication 12 ou 13, **caractérisé en ce que** les unités de mesure (20) sont disposées sur ou dans le module de mesure (60) de telle sorte qu'elles déterminent des distances par rapport au même objet ou par rapport à des objets différents.

15. Système de mesure de distance (10) selon l'une des revendications 6 à 14, **caractérisé en ce que** le système de mesure de distance comprend plusieurs modules de mesure (60) qui peuvent être reliés entre eux au moyen d'une liaison électrique par câble ou d'une liaison sans fil.

16. Véhicule (1) comportant un système de mesure de distance (10) selon l'une quelconque des revendications précédentes.

17. Véhicule (1) comportant un système de mesure de distance (10) selon l'une quelconque des revendications 1 à 15, le véhicule étant une machine mobile de construction ou de travail.

18. Véhicule (1) comportant un système de mesure de distance (10) selon l'une quelconque des revendications 1 à 15, le véhicule étant une plate-forme élévatrice de travail ou une échelle pivotante de pompiers, un panier de travail (80) étant agencé de manière mobile sur le véhicule, au moins un système de mesure de distance (10) étant disposé sur le panier de travail.

19. Véhicule (1) selon la revendication 18, dans lequel le panier de travail (80) agencé de manière mobile sur le véhicule comprend un plancher (81) et une rampe (reling) (82), et au moins un système de mesure de distance (10) est disposé sur le plancher et/ou la rampe (reling) ou est intégré dans le plancher et/ou dans la rampe (reling).
